(19) Europäisches Patentamt
European Patent Office
Office européen des brevets

(11) **EP 4 322 666 A1**

(12) **EUROPEAN PATENT APPLICATION**
published in accordance with Art. 153(4) EPC

(43) Date of publication:
**14.02.2024 Bulletin 2024/07**

(21) Application number: **22814983.7**

(22) Date of filing: **10.05.2022**

(51) International Patent Classification (IPC):
**H04W 72/04** (2023.01)

(52) Cooperative Patent Classification (CPC):
**H04W 4/70; H04W 72/02; H04W 72/04;**
**H04W 72/54**

(86) International application number:
**PCT/CN2022/092009**

(87) International publication number:
**WO 2022/252936 (08.12.2022 Gazette 2022/49)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **04.06.2021 CN 202110626104**
**14.07.2021 CN 202110794031**

(71) Applicant: **Huawei Technologies Co., Ltd.**
**Shenzhen, Guangdong 518129 (CN)**

(72) Inventors:
- **YANG, Yizhou**
  **Shenzhen, Guangdong 518129 (CN)**
- **WANG, Bichai**
  **Shenzhen, Guangdong 518129 (CN)**
- **LI, Xueru**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **RESOURCE SELECTION METHOD AND APPARATUS**

(57) This application provides a method and an apparatus for resource selection. The method includes: a first terminal device determines a first service to be sent; the first terminal device determines that a delay of transmitting the first service by using a first resource is greater than a first threshold, where the first resource is a resource indicated by a second terminal device; and the first terminal device selects a second resource, where the second resource is used to transmit the first service, and the second resource is different from the first resource. In this application, the first terminal device may select the second resource for the first service based on a service transmission requirement of the first terminal device only when the first resource cannot meet a delay requirement of the first service, so that a delay of transmitting the first service is reduced, and service transmission reliability of a terminal device is improved. In addition, when the first resource may meet the delay requirement of the first service, the first terminal device does not need to select a resource, so that power consumption caused by continuous resource selection may be reduced.

FIG. 3

**Description**

This application claims priority to Chinese Patent Application No. 202110626104.3, filed on June 4, 2021, and entitled "SL RESOURCE ALLOCATION METHOD", which is incorporated herein by reference in its entirety.

This application claims priority to Chinese Patent Application No. 202110794031.9, filed on July 14, 2021, and entitled "METHOD AND APPARATUS FOR RESOURCE SELECTION", which is incorporated herein by reference in its entirety.

**TECHNICAL FIELD**

This application relates to the field of communication, and more specifically, to a method and an apparatus for resource selection.

**BACKGROUND**

A side link (side link, SL) is a device-to-device (device-to-device, D2D) communication manner. As an important branch of a cellular internet of things technology, the side link creates a broad application prospect for an internet of things application. A typical application scenario of the SL includes vehicle to everything (vehicle to everything, V2X), a home scenario, a conference scenario, a group game scenario, and the like.

In the foregoing typical application scenario, a plurality of SL terminal devices (user equipment, UE) may perform resource configuration in a unit of a group (group). The plurality of terminal devices in the group may be divided into a group header (group header, GH) and a group member (group member, GM). The GH may perform centralized and unified resource allocation for the GM, to ensure that no interference exists in SL transmission in the group. In this manner, information exchange between the terminal device and a network device can be reduced, and an air interface delay can be reduced.

In a current group-based resource allocation process, to reduce power consumption of GM resource selection, the GH may periodically allocate an SL resource to the GM, or the GH may allocate a periodic resource to the GM, and the GM transmits a periodic service by using a resource allocated by the GH. However, when the GM has another service (for example, a burst (burst) service) to transmit, transmitting the service by using the resource allocated by the GH may cause an extra delay. Consequently, reliability of service transmission of the GM cannot be ensured.

**SUMMARY**

This application provides a method and an apparatus for resource selection, to improve service transmission reliability of a terminal device.

According to a first aspect, a method for resource selection is provided. The method includes: a first terminal device determines a first service to be sent; the first terminal device determines that a delay of transmitting the first service by using a first resource is greater than a first threshold, where the first resource is a resource indicated by a second terminal device; and the first terminal device selects a second resource, where the second resource is used to transmit the first service, and the second resource is different from the first resource.

In this application, when the first terminal device determines that there is the first service to be sent, the first terminal device determines that the delay brought by transmitting the first service by using the first resource allocated by the second terminal device is greater than the first threshold. Therefore, the first terminal device selects the second resource, and the second resource is used to transmit the first service. In other words, in this application, the first terminal device may select the second resource for the first service based on a service transmission requirement of the first terminal device when the first resource cannot meet a delay requirement, so that the delay of transmitting the first service is reduced, and service transmission reliability of the terminal device is improved.

With reference to the first aspect, in some implementations of the first aspect, the first resource is a periodic resource, and that the first terminal device determines that a delay of transmitting the first service by using a first resource is greater than a first threshold includes: the first terminal device determines, based on a cycle of the first resource and/or a size of the first resource, that the delay of transmitting the first service by using the first resource is greater than the first threshold.

In this application, the first terminal device determines that the first resource allocated by the second terminal device is the periodic resource. The first terminal device may determine, based on a cycle of the periodic resource and/or a size of the resource, the delay of transmitting the first service by using the first resource. When the delay is greater than the first threshold, the second resource is selected for the first service, to reduce the delay of transmitting the first service.

With reference to the first aspect, in some implementations of the first aspect, the method further includes: the first terminal device selects the second resource when it is determined that a priority of the first service is greater than a second threshold.

In this application, the first terminal device may determine, based on the priority of the first service, whether to select the second resource for the first service, and select the second resource when the priority of the first service is greater than the second threshold. In this manner, transmission of a high-priority service may be ensured.

With reference to the first aspect, in some implementations of the first aspect, the method further includes: the first terminal device determines a first time area based on the priority of the first service; the first terminal device receives resource information that is from the second terminal device, where the resource information includes a usage status of a resource that is in the first time area and that is not configured for the first terminal device; and the first terminal device determines a first candidate resource set based on the resource information. That the first terminal device selects a second resource includes: the first terminal device selects the second resource from the first candidate resource set in the first time area.

In view of this, the first terminal device may receive the resource information sent by the second terminal device. The resource information includes the usage status of the resource that is in the first time area and that is not configured for the first terminal device. The first terminal device may determine an available first candidate resource set based on the resource information, to select the second resource from the first candidate resource set in the first time area, so that timely transmission of the first service is ensured, and the delay of transmitting the first service is reduced.

With reference to the first aspect, in some implementations of the first aspect, the method further includes: the first terminal device performs resource sensing on all or some resources that are in the first time area; and the first terminal device selects a second candidate resource set in a second time area based on a resource sensing result in the first time area, where the resource sensing result indicates a usage status of a resource that is in the second time area. That the first terminal device selects a second resource includes: the first terminal device selects the second resource from the first candidate resource set and/or the second candidate resource set in the second time area.

In view of this, the first terminal device may perform resource sensing in the first time area, and then select an available second candidate resource set in the second time area based on a sensing result in the first time area. Further, the first terminal device selects the second resource from the first candidate resource set and/or the second candidate resource set in the second time area. Because the second candidate resource set is determined based on the sensing result, transmission quality of the first service may be improved by selecting the second resource from the second candidate resource set and the first candidate resource set.

With reference to the first aspect, in some implementations of the first aspect, the method further includes: the first terminal device transmits the first service by using the second resource.

With reference to the first aspect, in some implementations of the first aspect, the method further includes: the first terminal device sends first indication information to the second terminal device, where the first indication information indicates the first terminal device to transmit the first service by using the second resource.

In this application, the first terminal device may send a usage status of the second resource, that is, selected resource reservation information, to the second terminal device, so that the second terminal device may allocate a resource to another terminal device in a group based on a resource reservation status of the first terminal device, or indicate a resource reservation status of the first terminal device to another terminal device in a group. This helps resource configuration of the second terminal device, and also helps reduce interference.

With reference to the first aspect, in some implementations of the first aspect, the first terminal device and the second terminal device belong to a first side link SL device group.

In this application, the first terminal device and the second terminal device may be terminal devices that belong to an SL device group. Further, the first terminal device is a group member GM, and the second terminal device is a group header GH.

Optionally, the first terminal device and the second terminal device may be same terminal devices. To be specific, the first terminal device is the group header GH.

According to a second aspect, an apparatus for resource selection is provided. The apparatus includes: a processing unit, configured to determine a first service to be sent. The processing unit is further configured to: determine that a delay of transmitting the first service by using a first resource is greater than a first threshold, where the first resource is a resource indicated by a second terminal device; and the processing unit is further configured to: select a second resource, where the second resource is used to transmit the first service, and the second resource is different from the first resource.

With reference to the second aspect, in some implementations of the second aspect, the first resource is a periodic resource, and the processing unit is specifically configured to: determine, based on a cycle of the first resource and/or a size of the first resource, that the delay of transmitting the first service by using the first resource is greater than the first threshold.

With reference to the second aspect, in some implementations of the second aspect, the processing unit is further configured to: select the second resource when it is determined that a priority of the first service is greater than a second threshold.

With reference to the second aspect, in some implementations of the second aspect, the processing unit is further configured to: determine a first time area based on the priority of the first service. The apparatus further includes: a transceiver unit, configured to receive resource information that is from a second terminal device, where the resource information includes a usage status of a resource that is in the first time area and that is not configured for the apparatus. The processing unit is further configured to: determine a first candidate resource set based on the resource information. The processing unit is specifically configured to: select the second resource from the first candidate resource set in the first time area.

With reference to the second aspect, in some implementations of the second aspect, the processing unit is further configured to: perform resource sensing on all or some resources that are in the first time area; and select a second candidate resource set in a second time area based on a resource sensing result in the first time area, where the resource sensing result indicates a usage status of a resource that is in the second time area. The processing unit is specifically configured to: select the second resource from the first candidate resource set and/or the second candidate resource set in the second time area.

With reference to the second aspect, in some implementations of the second aspect, the transceiver unit is further configured to: transmit the first service by using the second resource.

With reference to the second aspect, in some implementations of the second aspect, the transceiver unit is further configured to: send first indication information to the second terminal device, where the first indication information indicates the first terminal device to transmit the first service by using the second resource.

With reference to the second aspect, in some implementations of the second aspect, the apparatus and the second terminal device belong to a first side link SL device group.

According to a third aspect, this application provides an apparatus for resource selection. The apparatus includes: at least one processor, where the at least one processor is coupled to at least one memory, and the at least one processor is configured to execute a computer program or instructions stored in the at least one memory, to enable the apparatus to perform the foregoing method according to the first aspect or any one of the possible implementations in the first aspect.

According to a fourth aspect, a processor is provided, including: an input circuit, an output circuit, and a processing circuit. The processing circuit is configured to: receive a signal by using the input circuit, and transmit the signal by using the output circuit, to enable the processor to perform the method according to the first aspect or any one of the possible implementations in the first aspect.

During a specific implementation process, the processor may be a chip. The input circuit may be an input pin. The output circuit may be an output pin. The processing circuit may be a transistor, a gate circuit, a flip-flop, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to a fifth aspect, a processing apparatus is provided, including a communication interface and a processor. The communication interface is coupled to the processor. The communications interface is configured to input and/or output information. The information includes at least one of instructions and data. The processor is configured to execute a computer program, to enable the processing apparatus to perform the method according to the first aspect or any one of the implementations in the first aspect.

Optionally, there are one or more processors, and there are one or more memories.

According to a sixth aspect, a processing apparatus is provided, including a processor and a memory. The processor is configured to read instructions stored in the memory, and may receive a signal through a receiver, and transmit the signal through a transmitter, to enable the processing apparatus to perform the method according to the first aspect or any one of the possible implementations in the first aspect.

Optionally, there are one or more processors, and there are one or more memories.

Optionally, the memory may be integrated with the processor, or the memory and the processor are separately configured.

In a specific implementation process, the memory may be a non-transitory (non-transitory) memory, such as a read-only memory (read-only memory, ROM). The memory and the processor may be integrated into one chip, or may be separately configured in different chips. A type of the memory and a manner in which the memory and the processor are configured are not limited in embodiments of this application.

It should be understood that a related information exchange process such as sending indication information may be a process of outputting the indication information from the processor, and receiving indication information may be a process of inputting the received indication information to the processor. Specifically, information output by the processor may be output to a transmitter, and input information received by the processor may be from a receiver. The transmitter and the receiver may be collectively referred to as a transceiver

According to a seventh aspect, this application provides a computer-readable medium. The computer-readable medium stores a computer program (also referred to as code or instructions). When the computer program is run on a computer, the computer is enabled to perform the method according to the first aspect or any one of the possible implementations in the first aspect.

According to an eighth aspect, a computer program product is provided. The computer program product includes a computer program (also referred to as code or instructions). When the computer program is run, a computer is enabled to perform the method according to the first aspect or any one of the possible implementations in the first aspect.

According to a ninth aspect, this application provides a chip system, including: a processor. The processor is configured to execute a computer program or instructions in a memory, to enable the chip system to implement the method according to the first aspect or any one of the possible implementations in the first aspect.

**BRIEF DESCRIPTION OF DRAWINGS**

FIG. 1 is a schematic diagram of a communication system applicable to an embodiment of this application;
FIG. 2 is a schematic diagram of a group-based communication manner according to an embodiment of this application;
FIG. 3 is a schematic block diagram of a method for resource selection according to this application;
FIG. 4 is a schematic diagram of a method for resource selection according to this application;
FIG. 5 is a schematic block diagram of an apparatus for resource selection according to an embodiment of this application; and
FIG. 6 is a schematic block diagram of an apparatus for resource selection according to an embodiment of this application.

**DESCRIPTION OF EMBODIMENTS**

Technical solutions in embodiments of this application may be applied to various communication systems, for example, a long term evolution (long term evolution, LTE) system, an LTE frequency division duplex (frequency division duplex, FDD) system, LTE time division duplex (time division duplex, TDD), a universal mobile telecommunication system (universal mobile telecommunication system, UMTS), a worldwide interoperability for microwave access (worldwide interoperability for microwave access, WiMAX) communication system, a 5th generation (5th generation, 5G) system, or a new radio (new radio, NR) system.

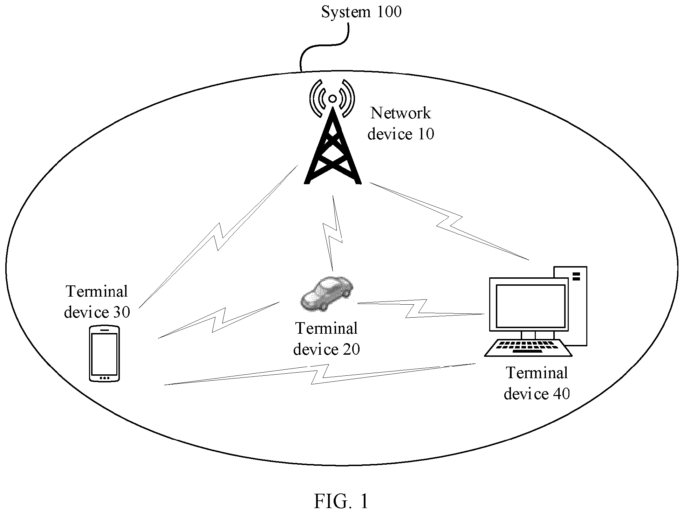

FIG. 1 is a schematic diagram of a wireless communication system 100 applicable to an embodiment of this application. As shown in FIG. 1, the wireless communication system 100 may include one or more network devices, for example, a network device 10 shown in FIG. 1. The wireless communication system 100 may further include one or more terminal devices (referred to as user equipment (user equipment, UE)), for example, a terminal device 20, a terminal device 30, and a terminal device 40 that are shown in FIG. 1. The terminal device 20, the terminal device 30, and the terminal device 40 may communicate with each other.

It should be understood that FIG. 1 is only a schematic diagram, and the communication system may further include another network device, for example, may further include a core network device, a wireless relay device, and a wireless backhaul device that are not shown in FIG. 1. Quantities of network devices and terminal devices included in the mobile communication system are not limited in embodiments of this application.

In the mobile communication system 100, the terminal device 20, the terminal device 30, and the terminal device 40 in this embodiment of this application may also be referred to as: a mobile station (mobile station MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The terminal device in this application may be a device that provides a user with voice/data connectivity, for example, a handheld device or a vehicle-mounted device that has a wireless connection function. Currently, for example, some terminals may be a mobile phone (mobile phone), a tablet computer, a notebook computer, a palmtop computer, a mobile internet device (mobile internet device, MID), a virtual reality (virtual reality, VR) device, an augmented reality (augmented reality, AR) device, a wireless terminal (for example, a camera, and customer premise equipment (customer premise equipment, CPE)) in industrial control (industrial control), a wireless terminal in self driving (self driving), a wireless terminal in remote medical surgery (remote medical surgery), and a wireless terminal in a smart grid (smart grid), a wireless terminal in transportation safety (transportation safety), a wireless terminal in a smart city (smart city), a wireless terminal (for example, a smart appliance such as a television, a smart box, a game console, and a smart home product) in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, or another processing device connected to a wireless modem, an in-vehicle device, and a wearable device, a terminal device in a 5G network, a terminal device in a future evolved public land mobile network (public land mobile network, PLMN), or the like. This is not limited in embodiments of this application.

As an example instead of a limitation, in embodiments of this application, the terminal device may alternatively be a wearable device. The wearable device may also be referred to as a wearable intelligent device, and is a general term for wearable devices, such as glasses, gloves, watches, clothes, and shoes, that are developed by applying wearable technologies to intelligent designs of daily wear. The wearable device is a portable device that is worn on a body directly or integrated into clothes or an accessory of a user. The wearable device is not only a hardware device, but also implements a powerful function through software support, data exchange, and cloud interaction. Generalized wearable intelligent devices include full-function and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, in embodiments of this application, the terminal device may alternatively be a terminal device in an internet of things (internet of things, IoT) system. IoT is an important part of future development of information technologies. A main technical feature of the IoT is connecting a thing to a network by using a communication technology, to implement an intelligent network for interconnection between a person and a machine or between things.

In embodiments of this application, the terminal device may alternatively be a vehicle or an entire vehicle, and may implement communication by using internet of vehicles, or may be a component located in the vehicle (for example, placed in the vehicle or installed in the vehicle), that is, an on-board terminal device, an on-board module, or an on-board unit (on-board unit, OBU).

The network device 10 in this embodiment of this application may be a device configured to communicate with the terminal device. The network device may be a base station, an evolved NodeB (evolved node B, eNB), a home base station, an access point (access point, AP), a wireless relay node, a wireless backhaul node, a transmission point (transmission point, TP), a transmission and reception point (transmission and reception point, TRP), or the like in a wireless fidelity (wireless fidelity, WIFI) system, or may be a gNB in an NR system. Alternatively, the network device may be a component or a part of a device that constitutes the base station, for example, a central unit (central unit, CU), a distributed unit (distributed unit, DU), or a baseband unit (baseband unit, BBU). It should be understood that a specific technology used by and a specific device form of the network device are not limited in embodiments of this application. In this application, the network device may be a network device itself, or may be a chip used in the network device to complete a wireless communication processing function.

In embodiments of this application, the terminal device or the network device includes a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a main memory). This operating system may be any one or more types of computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software. A specific structure of an execution body of the method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by a terminal device, a network device, or a function module that is in a terminal device or a network device and that can invoke a program and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, include and/or carry instructions and/or data.

In the foregoing communication system, a communication link between terminal devices may be referred to as a side link (side link, SL). The SL is a device-to-device (device-to-device, D2D) communication manner. As an important branch of a cellular internet of things technology, the side link creates a broad application prospect for an internet of things application. A typical application scenario of the SL includes vehicle to everything (vehicle to everything, V2X), a home scenario, a conference scenario, a group game scenario, and the like.

In the foregoing typical application scenario, a plurality of SL terminal devices (user equipment, UE) may perform resource configuration in a unit of a group (group). The plurality of terminal devices in the group may be divided into a group header (group header, GH) and a group member (group member, GM). A terminal device used as the GH may play a role of strong scheduling to coordinate management of an entire group, and may have a capability of a part of a base station, have a central control function, and be a device that can configure a resource and receive data. Therefore, the GH may perform centralized and unified resource allocation for the GM, to ensure that no interference exists in SL transmission in the group. In this manner, information exchange between the terminal device and a network device can be reduced, and an air interface delay can be reduced.

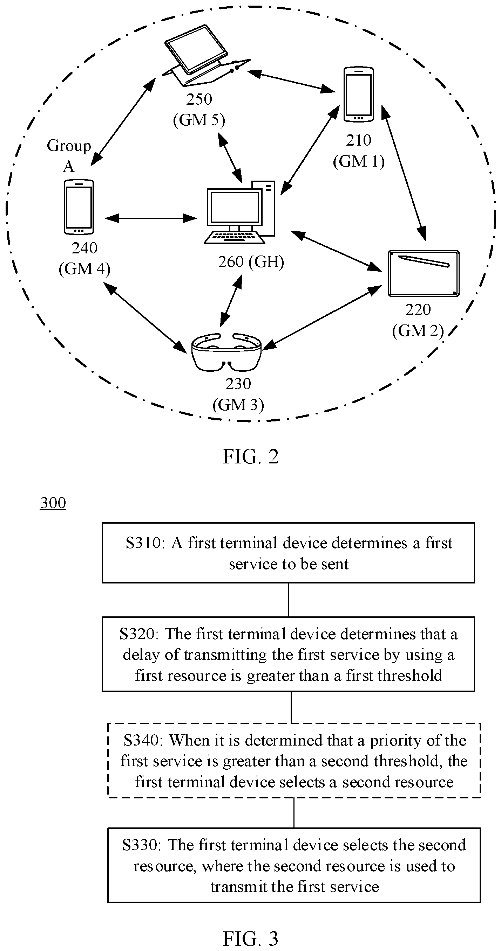

FIG. 2 is a schematic diagram of a group-based communication manner according to an embodiment of this application. As shown in FIG. 2, a group (group) A includes six terminal devices. A terminal device 210, a terminal device 220, a terminal device 230, a terminal device 240, and a terminal device 250 are respectively used as group members, that is, a GM 1, a GM 2, a GM 3, a GM 4, and a GM 5. A terminal device 260 is used as a group header GH, and may allocate transmission resources to the GM 1, the GM 2, the GM 3, the GM 4, and the GM 5. Each GM performs side link SL transmission by using the resource allocated by the GH.

In a current group-based resource allocation process, to reduce power consumption of GM resource selection, the GH may periodically allocate an SL resource to the GM, and the GM performs SL communication in each resource allocation period by using the resource allocated by the GH; or the GH may allocate a periodic resource to the GM, and the GM transmits a periodic service by using the periodic resource allocated by the GH. However, when the GM has another service (for example, a burst (burst) service) to transmit, transmitting the service by using the resource allocated by the GH may cause an extra delay. Consequently, reliability of service transmission of the GM cannot be ensured.

In view of this, this application provides a method and an apparatus for resource selection, to improve service transmission reliability of a terminal device.

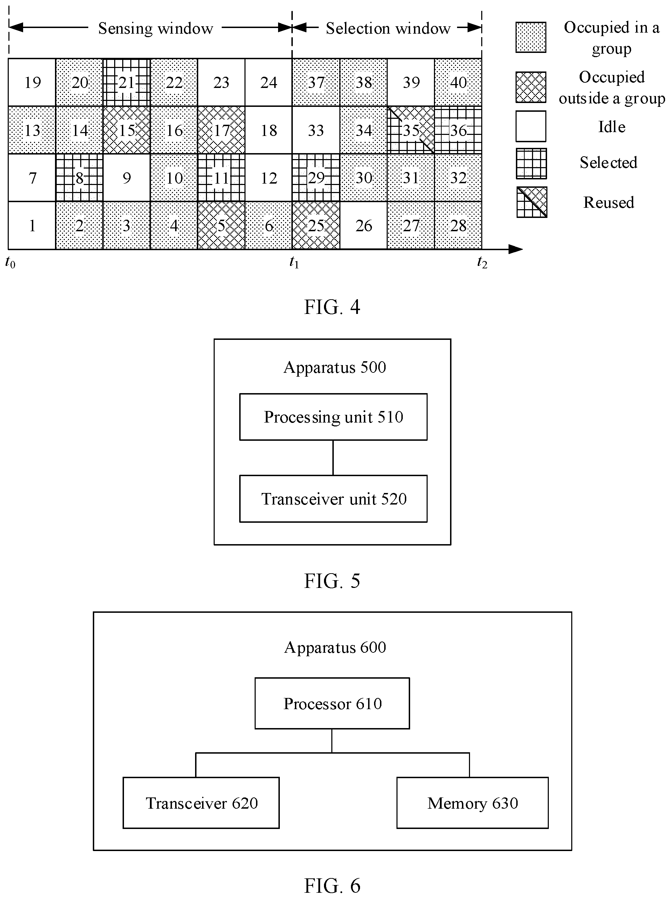

The following describes in detail the method for resource selection provided in this application with reference to FIG. 3 and FIG. 4.

FIG. 3 is a schematic block diagram of a method 300 for resource selection according to this application. The method may be performed by any terminal device in FIG. 1 or FIG. 2, or may be performed by a component (for example, a unit, a module, a chip, or a chip system) configured in the terminal device.

S310: A first terminal device determines a first service to be sent.

Specifically, that a first terminal device determines a first service to be sent may be that the first terminal device determines that a burst service arrives, or may be that the first terminal device has a requirement for sending a service. The burst service may be understood as an aperiodic service, and the burst service is irregular in transmission time.

S320: The first terminal device determines that a delay of transmitting the first service by using a first resource is greater than a first threshold, where the first resource is a resource indicated by a second terminal device.

In a possible implementation, the first resource is a periodic resource, and that the first terminal device determines that a delay of transmitting the first service by using a first resource is greater than a first threshold includes: the first terminal device determines, based on a cycle of the first resource and/or a size of the first resource, that the delay of transmitting the first service by using the first resource is greater than the first threshold.

It should be noted that the first resource indicated by the second terminal device may be a periodic resource. This includes but is not limited to the following two cases:

Case 1: The second terminal device periodically indicates the first resource for the first terminal device, and time-frequency resources indicated each time may be the same or may be different. For example, the second terminal device indicates the first resource for the first terminal device once every t milliseconds, and a time-frequency resource indicated each time may be different from a time-frequency resource indicated last time.

Case 2: The second terminal device indicates the size and the cycle of the first resource, that is, indicates the size and the cycle of the first resource once, and a size of the first resource in each cycle is the same.

For the foregoing two cases, the first terminal device may determine, based on arrival time of the periodic resource, the delay of transmitting the first service by using the first resource. For example, the first terminal device determines that a currently indicated first resource is being used to transmit a periodic service, and the first service may be transmitted in a next cycle. The first terminal device determines that a transmission delay caused by this cycle interval exceeds the first threshold. Alternatively, the first terminal device determines that the first service needs to be sent currently but the first terminal device is not at a time of resource configuration. To be specific, the first resource indicated by the second terminal device needs to arrive in a next cycle, so that a transmission delay of the first service is greater than the first threshold. Alternatively, the first terminal device determines that a size of the currently indicated first resource is insufficient, and the first service cannot be transmitted in one cycle. Therefore, the first terminal device determines, based on a size of the cycle, that the delay is greater than the first threshold.

In this application, the first terminal device determines that the first resource allocated by the second terminal device is the periodic resource. The first terminal device may determine, based on a cycle of the periodic resource, the delay of transmitting the first service by using the first resource. When the delay is greater than the first threshold, a second resource is selected for the first service, to reduce the delay of transmitting the first service.

In a possible implementation, the first resource indicated by the second terminal device may alternatively be aperiodic. When receiving the first service, the first terminal device may send request information to the second terminal device, to request the second terminal device to configure, for the first terminal device, a first resource suitable for the first service. To ensure transmission reliability of the first service, before sending the request information, the first terminal device may estimate, based on factors such as a transmission condition between the first terminal device and the second terminal device and a network environment, a time at which the first resource arrives, to be specific, the first terminal device determines a time required for the second device to configure the first resource, to determine that the delay of transmitting the first service by using the first resource is greater than the first threshold.

For example, the first threshold may be packet delay budget (packet delay budget, PDB) information of the first service. The PDB information indicates a delay requirement of the first service. To be specific, a period of time in which the first service should be transmitted. Further, the first terminal device may determine, based on the PDB information and a status of the first resource, that the delay of transmitting the first service by using the first resource is greater than the first threshold.

In a possible implementation, the first terminal device may alternatively determine that the size of the first resource indicated by the second terminal device is insufficient for transmitting the first service, so that a delay requirement of the first service cannot be met (for example, a maximum delay requirement is exceeded). Therefore, it is determined that the delay for transmitting the first service by using the first resource is greater than the first threshold.

S330: The first terminal device selects the second resource, where the second resource is used to transmit the first service, and the second resource is different from the first resource.

For example, the first threshold may alternatively be a preset value locally configured by the first terminal device. When determining that the delay of transmitting the first service by using the first resource is greater than the first threshold, the first terminal device spontaneously selects the second resource, and may further transmit the first service by using the second resource, so that the delay of transmitting the first service is reduced.

Optionally, the first threshold may alternatively be indicated by the second terminal device or a network device for the first terminal device in a static, semi-static, or dynamic manner. The foregoing is merely an example. This is not limited in this application.

In this application, the first terminal device may locally configure a resource selection mechanism. When determining that the delay of transmitting the first service by the by using the first resource is greater than the first threshold, the first terminal device starts to select the second resource.

Optionally, the second terminal device or the network device may configure the foregoing resource selection mechanism for the first terminal device in a static, semi-static, or dynamic manner. When the first terminal device determines that the delay of transmitting the first service by using the first resource indicated by the second terminal device is greater than the first threshold, the first terminal device may enable the resource selection mechanism, and select the second resource.

Therefore, in this application, when the first terminal device determines that there is the first service to be sent, the first terminal device determines that the delay brought by transmitting the first service by using the first resource allocated by the second terminal device is greater than the first threshold. Therefore, the first terminal device selects the second resource, and the second resource is used to transmit the first service. In other words, in this application, the first terminal device may select the second resource for the first service based on a service transmission requirement of the first terminal device when the first resource cannot meet a delay requirement, so that the delay of transmitting the first service is reduced, and service transmission reliability of the terminal device is improved.

In addition, in this application, when the first resource may meet the delay requirement of the first service, the first terminal device does not need to select a resource, so that power consumption caused by continuous resource selection may be reduced.

Optionally, the method 200 further includes: S340: When it is determined that a priority of the first service is greater than a second threshold, the first terminal device selects the second resource. It may be understood that the first terminal device may select the second resource when it is determined that the delay of transmitting the first service by using the first resource is greater than the first threshold, select the second resource when it is determined that the priority of the first service is greater than the second threshold, or select the second resource when it is determined that the delay of transmitting the first service by using the first resource is greater than the first threshold and the priority of the first service is greater than the second threshold. In other words, one of step S320 and step S340 may be met, or both step S320 and step S340 may be met, and a sequence of S320 and S340 is not limited.

It should be understood that the second threshold may alternatively be a preset value locally configured by the first terminal device, or may alternatively be indicated by the second terminal device or the network device for the first terminal device in a static, semi-static, or dynamic manner. This is not limited in this application.

In this application, the first terminal device may obtain the priority of the first service by using an application layer of the first terminal device, and select the second resource when the priority of the first service is greater than the second threshold. In this manner, preferential transmission of a high-priority service may be ensured.

Optionally, the method further includes: the first terminal device determines a first time area based on the priority of the first service.

Specifically, the first terminal device may first determine a first parameter based on the priority. The first parameter is a proportion of first data to the first service, and the first data is a part of data in the first service. The first data may be transmitted by using a first part of the second resource selected in the first time area. In this way, it may be ensured that the first data in the first service is transmitted in time, and a communication delay is reduced.

For example, the first parameter y may be determined by using Formula (1).

$$y = n - m * p \tag{1}$$

In Formula (1), n is a constant and represents a highest proportion of a service volume that may be used to select the second resource in the first time area, m is a weighting constant, p is the priority of the first service, and a lower value of p indicates a higher service priority. Both parameters n and m are real numbers not less than 0, and may be preconfigured in the first terminal device, or may be configured by the network device or the second terminal device for the first terminal device. Therefore, when the service priority is higher, the proportion of the first data to the first service is correspondingly higher, and determined duration of the first time area is shorter.

Further, the first terminal device may determine the first time area based on the first parameter and the priority of the first service.

For example, the first time area W may be determined by using Formula (2).

$$W = c * p + b * d * (1 - y) \tag{2}$$

In Formula (2), c and b are weighting constants, and d is a size of a data volume of the first service. Both parameters c and b are real numbers not less than 0, and may be preconfigured by the first terminal device, or may be configured by the network device or the second terminal device for the first terminal device.

It should be understood that Formula (1) and Formula (2) are merely examples, and are not limited in this application.

In this embodiment of this application, before determining to select the second resource, the first terminal device is in an energy saving state, and does not receive a physical sidelink control channel (physical sidelink control channel, PSCCH). Therefore, the first terminal device cannot immediately start resource sensing, and needs to first receive and buffer data of a period of time in the first time area, and then decodes the PSCCH based on buffered data, so that resource sensing is performed on all or some resources that are in the first time area.

In a possible implementation, the first terminal device receives resource information that is from the second terminal device. The resource information includes a usage status of a resource that is in the first time area and that is not configured for the first terminal device. Then the first terminal device determines a first candidate resource set based on the resource information. That the first terminal device selects a second resource includes: the first terminal device selects the second resource from the first candidate resource set in the first time area.

In other words, in this application, the first terminal device receives the resource information sent by the second terminal device. The resource information includes the usage status of the resource that is in the first time area and that is not configured for the first terminal device, to be specific, includes a usage status of a resource of another terminal device in a group. The first terminal device may exclude, based on the resource information, a resource used by the another terminal device and a resource reserved for the another terminal device in the group, determine an available first candidate resource set, and then select the second resource from the first candidate resource set in the first time area.

It should be understood that the first candidate resource set may also include a resource that is known by the second terminal device and that is not reserved or used, that is, an idle resource.

Optionally, the resource information sent by the second terminal device to the first terminal device may alternatively include a usage status of a resource outside the group. This is not limited in this application.

It should be understood that, if the first terminal device has no available resource after excluding the resource used by the another terminal device and the resource reserved for the another terminal device in the group, the first terminal device may also detect a second parameter such as reference signal receiving power (reference signal receiving power, RSRP) and/or reference signal receiving quality (reference signal receiving quality, RSRQ) between the first terminal device and each terminal device. If a value of the second parameter is less than a threshold of the second parameter, it is considered that interference is small. Therefore, these resources with small interference may be used as resources in the first candidate resource set. In other words, when transmitting the first data, the first terminal device may share the resource with another terminal device, thereby improving a resource utilization rate.

After the first terminal device selects the second resource from the first candidate resource set in the first time area, the first terminal device may transmit the first data in the first time area by using the selected resource. The first terminal device may alternatively select a second candidate resource set in a second time area, and then select the second resource from the first candidate resource set and/or the second candidate resource set, to transmit second data. The second data is data other than the first data in the first service.

In other words, in this application, the second resources for transmitting the first data and the second data may be respectively selected from the first candidate resource set and the second candidate resource set, or may be selected from the first candidate resource set, or the second resource for transmitting the first data may be selected from the first candidate resource set, and the second resource for transmitting the second data is selected from a resource set including the first candidate resource set and the second candidate resource set. This is not limited in this application. When the second resources are selected from the first candidate resource set, it may be understood that the first data is all data of the first service.

It should be further understood that the first data and the second data in this application indicate a part of data in the first service, and a meaning is to gradually transmit the first service. A part of resources is first selected to transmit a part of the first service, that is, the first data, and then a part of resources is selected to transmit the other part of the first service, that is, the second data. When the second data is transmitted, the first data is transmitted.

Optionally, the method further includes: the first terminal device performs resource sensing on all or some resources that are in the first time area, and then selects the second candidate resource set in the second time area based on a resource sensing result in the first time area. The resource sensing result indicates a resource usage or reservation status in the second time area. That the first terminal device selects a second resource includes: the first terminal device selects the second resource from the first candidate resource set and/or the second candidate resource set in the second time area.

Specifically, the first terminal device may determine the second candidate resource set in the first time area by using a resource sensing (sensing) procedure. To be specific, the first terminal device continuously receives a physical sidelink control channel (physical sidelink control channel, PSCCH) of another terminal on all or some resources that are in the first time area, to determine a resource usage status of the another terminal, so that an unavailable resource in the second time area is further excluded, to determine an available second candidate resource set. It should be understood that, a resource selection mechanism based on resource sensing needs to determine a resource sensing window (sensing window) and a resource selection window (selection window). The resource sensing window is used to obtain a sensing result, and the resource selection window is used to select a resource based on the sensing result. In this application, the resource sensing window may be a time domain range in which the first time area is located, and the resource selection window may be a time domain range in which the second time area is located.

For example, an unavailable resource in the second time area may be determined in at least one of the following manners:

Manner 1: According to the resource information sent by the second terminal device, when the resource used by the another terminal device or the resource reserved for the another terminal device in the group falls within the resource selection window, the resource is considered as the unavailable resource.

Manner 2: The resource used by the another terminal device or the resource reserved for the another terminal device in or outside the group overlaps a resource sent in the resource selection window, including partially overlapping or fully overlapping. In this case, determining is further performed by using the second parameter such as the RSRP and/or the RSRQ. If a value of the second parameter measured on an overlapped resource is greater than the threshold of the second parameter, the resource is considered as an unavailable candidate resource.

The second candidate resource set may be determined by excluding the unavailable resource from the resource selection window based on the sensing result.

It should be understood that, after the unavailable resource is excluded, a remaining available candidate resource in the resource selection window may further be counted. If a proportion of the resource required in the second time area to a quantity of remaining candidate resources in the resource selection window is less than a third threshold, the threshold of the second parameter may be adjusted. For example, a threshold of the RSRP is increased by 3 db, to be specific, the excluded unavailable resource is reduced, so that the proportion of the resource required in the second time area of the candidate resource to the quantity of remaining candidate resources reaches the third threshold.

For example, the third threshold may be a value such as 20%, 35%, or 50%. It may be understood that the foregoing is merely an example, and this is not limited in this application.

Optionally, the method further includes: the first terminal device transmits the first service by using the second resource.

In a possible implementation, the method further includes: the first terminal device may select the first data from the first service based on the first parameter That the first terminal device transmits the first service by using the second resource may include: the first terminal device transmits, in the first time area, the first data by using the first part of the second resource selected in the first time area. In other words, the first terminal device may first determine that a part of resources is used to transmit a part of the first service. In this manner, it may be ensured that data in the first service is transmitted in time, thereby reducing a communication delay.

In a possible implementation, data other than the first data in the first service may be referred to as second data. That the first terminal device transmits the first service by using the second resource may include: the first terminal device transmits, in the second time area, the second data by using a second part of the second resource selected in the second time area. Because the second candidate resource set is determined based on the sensing result, accuracy is higher. The first terminal device selects the second resource from the second candidate resource set and the first candidate resource set, so that transmission quality of the first service may be improved.

In some other embodiments, the first service includes a plurality of services, and the first terminal device may select a first part service from the first service based on the first parameter The first terminal device transmits, in the first time area, the first part service by using the first part of the second resource selected in the first time area. A service other than the first part service in the first service may be referred to as a second part service. The first terminal device transmits, in the second time area, the second part service by using the second part of the second resource selected in the second time area.

In a possible implementation, the method further includes: the first terminal device sends first indication information to the second terminal device, where the first indication information indicates the first terminal device to transmit the first service by using the second resource.

In this application, the first terminal device may send a usage status of the second resource, that is, selected resource reservation information, to the second terminal device, so that the second terminal device may allocate a resource to another terminal device in a group based on a resource reservation status of the first terminal device, or indicate a resource reservation status of the first terminal device to another terminal device in a group. This helps resource configuration of the second terminal device, and also helps reduce interference.

In a possible implementation, the first terminal device and the second terminal device belong to a first side link SL device group.

In this application, the first terminal device and the second terminal device may be terminal devices that belong to an SL device group. Further, the first terminal device is a group member GM, and the second terminal device is a group header GH.

It should be understood that the first terminal device and the second terminal device may be the same, to be specific, the first terminal device is the group header GH, and the first terminal device selects a resource by using the method 300 for resource selection in this application.

The following describes in detail the method for resource selection in this application with reference to and FIG. 4.

FIG. 4 is a schematic diagram of a method for resource selection according to this application. As shown in FIG. 4, a terminal device #A (an example of a first terminal device) determines, at a moment to, to send a service #A (an example of a first service). The terminal device #A starts a sensing procedure, and obtains duration (an example of a first time area) of a sensing window (sensing window) through calculation based on a priority of the service #A, to be specific, a time period from to to $t_1$. In the sensing window, the terminal device #A is based on resource information sent by the terminal device #B (an example of a second terminal device). The resource information includes a usage status of a resource that is in the sensing window and that is not configured for the terminal device #A, or includes a usage status of a resource of a group #1 (an example of a first SL device group) in which the terminal device #A and the terminal device #B are located. Specifically, in FIG. 4, the terminal device #A learns that resources 2, 3, 4, 10, 13, 14, 16, 20, and 22 are transmission-occupied resources in the group #1. The terminal device #A may exclude, based on the resource information, occupied resources in the group #1, to determine a candidate resource set #1 (an example of a first candidate resource set), including resources 1, 5, 7, 8, 9, 11, 12, 15, 17, 18, 19, 21, 23 and 24. The resources 5, 15, and 17 are transmission-occupied resources that are of same or different terminal devices and that are outside the group #1. When the terminal device #A cannot learn a usage status of resources outside the group #1, these resources are also used as elements of the candidate resource set #1. It should be understood that, in this case, a resource selected by the terminal device #A may overlap occupied resources outside the group #1, to be specific, a resource conflict occurs.

Optionally, the resource information sent by the terminal device #B to the terminal device #A may alternatively include a usage status of resources outside the group #1, to be specific, the resources 5, 15, and 17 are transmission-occupied resources of the terminal device outside the group #1. Further, the terminal device may exclude, based on the resource information, the occupied resources in the group #1 and the occupied resources outside the group #1, to determine a candidate resource set #1 (another example of the first candidate resource set), including resources 1, 7, 8, 9, 11, 12, 18, 19, 21, 23 and 24.

Further, the terminal device #A may randomly select a resource from the candidate resource set #1 in the sensing window. The selected resource is an example of a second resource, or may be referred to as an example of a first part of a second resource. As shown in FIG. 4, resources selected by the terminal device #A in the sensing window are the resources 8, 11, and 21.

When sensing is completed, the terminal device #A may select a resource in a selection window (an example of a second time area) based on a sensing result. As shown in FIG. 4, the sensing result obtained by the terminal device #A is that resources 27, 28, 30, 31, 32, 34, 37, 38, and 40 in the selection window are transmission-occupied resources in the group #1, resources 26, 29, 33, 36, and 39 are idle resources, and resources 25 and 35 are transmission-occupied resources that are of same or different terminal devices and that are outside the group #1. The terminal device #A may determine the transmission-occupied resources 27, 28, 30, 31, 32, 34, 37, 38, and 40 in the group #1 in the selection window as unavailable resources. Further, the terminal device #A may further measure RSRP of the resources 25 and 35 that are outside the group, and further determine that the RSRP of the resource 25 is greater than a threshold of the RSRP, so that the resource 25 is determined as an unavailable resource. By excluding the unavailable resource, the terminal device #A determines a candidate resource set #2 (an example of a second candidate resource set), including the resources 26, 29, 33, 35, 36, and 39.

In the selection window, the terminal device #A may select a resource from the candidate resource set #2. The selected resource is an example of the second resource, or may be referred to as an example of a second part of the second resource. As shown in FIG. 4, resources selected by the terminal device #A in the selection window are the resources 29, 35, and 36, and the resource 35 is a shared resource.

After the resource is selected, the terminal device #A may transmit the service #A by using the resources 8, 11, and 21 and the resources 29, 35, and 36. After the resources 8, 11, and 21 are selected, the resources 8, 11, and 21 may be used to transmit a part of the service #A, to ensure timely transmission of the service #A. It may be understood that the service #A may be one service, or may be a service set including a plurality of services.

It should be understood that FIG. 4 is merely an example, and does not constitute a limitation on the method of this application.

The following describes the apparatus for resource selection provided in embodiments of this application with reference to FIG. 5 and FIG. 6.

FIG. 5 is a schematic block diagram of an apparatus for resource selection according to an embodiment of this application. An apparatus 500 may be a first terminal device, or may be a component (for example, a unit, a module, a chip, or a chip system) configured in the first terminal device. The apparatus 500 includes: a processing unit 510, configured to determine a first service to be sent.

The processing unit 510 is further configured to: determine that a delay of transmitting the first service by using a first resource is greater than a first threshold, where the first resource is a resource indicated by a second terminal device.

The processing unit 510 is further configured to: select a second resource, where the second resource is used to transmit the first service, and the second resource is different from the first resource.

Optionally, the first resource is a periodic resource, and the processing unit 510 is specifically configured to: determine, based on a cycle of the first resource and/or a size of the first resource, that the delay of transmitting the first service by using the first resource is greater than the first threshold.

Optionally, the processing unit 510 is further configured to: when it is determined that a priority of the first service is greater than a second threshold, select the second resource.

Optionally, the processing unit 510 is further configured to: determine a first time area based on the priority of the first service.

Optionally, the apparatus 500 further includes: a transceiver unit 520, configured to receive resource information that is from the second terminal device, where the resource information includes a usage status of a resource that is in the first time area and that is not configured for the apparatus 500. The processing unit 510 is further configured to: determine a first candidate resource set based on the resource information. The processing unit 510 is specifically configured to: select the second resource from the first candidate resource set in the first time area.

Optionally, the processing unit 510 is further configured to: perform resource sensing on all or some resources that are in the first time area, and select a second candidate resource set in a second time area based on a resource sensing result in the first time area, where the resource sensing result indicates a usage status of a resource in the second time area. The processing unit 510 is specifically configured to: select the second resource from the first candidate resource set and/or the second candidate resource set in the second time area.

Optionally, the transceiver unit 520 is further configured to: transmit the first service by using the second resource.

Optionally, the transceiver unit 520 is further configured to: send first indication information to the second terminal device, where the first indication information indicates the first terminal device to transmit the first service by using the second resource.

Optionally, the apparatus 500 and the second terminal device belong to a first side link SL device group.

It should be understood that the apparatus 500 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 500 may be specifically the first terminal device in the foregoing method 300 embodiments, and the apparatus 500 may be configured to perform each procedure and/or step corresponding to the first terminal device in the foregoing method 300 embodiments. To avoid repetition, details are not described herein again.

It should be understood that the transceiver unit 520 may include a receiving unit 521 and a sending unit 522. The receiving unit 521 is configured to perform a receiving function in the transceiver unit 520. For example, the receiving unit 521 receives the resource information that is from the second terminal device. The sending unit 522 is configured to perform a sending function in the transceiver unit 520. For example, the sending unit 522 transmits the first service by using the second resource.

FIG. 6 is a schematic block diagram of an apparatus 600 for resource selection according to an embodiment of this application. The apparatus 600 may be the first terminal device in FIG. 3, and the apparatus 600 may use a hardware architecture shown in FIG. 6. The apparatus may include a processor 610, a transceiver 620, and a memory 630. The processor 610, the transceiver 620, and the memory 630 communicate with each other by using an internal connection path. A related function implemented by the processing unit 510 in FIG. 5 may be implemented by the processor 610, and a related function implemented by the transceiver unit 520 may be implemented by the processor 610 by controlling the transceiver 620.

The processor 610 may include one or more processors, for example, include one or more central processing units (central processing units, CPUs). When the processor is one CPU, the CPU may be a single-core CPU, or may be a multi-core CPU.

The transceiver 620 is configured to send and receive data and/or information, and receive data and/or information. The transceiver may include a transmitter and a receiver. The transmitter is configured to send data and/or a signal, and the receiver is configured to receive data and/or a signal.

The memory 630 includes but is not limited to a random access memory (random access memory, RAM), a read-only memory (read-only memory, ROM), an erasable programmable read-only memory (erasable programmable read-only memory, EPROM), and a compact disc read-only memory (compact disc read-only memory, CD-ROM). The memory 630 is configured to store related instructions and data.

The memory 630 is configured to store program code and data of the apparatus, and may be a separate component or integrated into the processor 610.

Specifically, the processor 610 is configured to control the transceiver to perform information/data transmission with the network device. For details, refer to the descriptions in the method embodiment. Details are not described herein again.

It may be understood that FIG. 6 shows only a simplified design of the apparatus. In an actual application, the apparatus may further include another necessary component, including but not limited to any quantity of transceivers, processors, controllers, memories, and the like, and all apparatuses that can implement this application shall fall within the protection scope of this application.

In a possible design, the apparatus 600 may be replaced with a chip apparatus, for example, may be a communication chip that may be used in the apparatus, and is configured to implement related functions of the processor 610 in the apparatus. The chip apparatus may be a field programmable gate array, a dedicated integrated chip, a system chip, a central processing unit, a network processor, a digital signal processing circuit, a microcontroller, a programmable controller, or another integrated chip for implementing related functions. Optionally, the chip may include one or more memories, configured to store program code. When the code is executed, the processor is enabled to implement a corresponding function.

It should be understood that when the foregoing apparatuses 500, and 600 each are a chip or a chip system, the transceiver or the transceiver unit of the apparatus may be an input/output interface. The receiver or the receiving unit may be understood as the input interface, and the transmitter or the sending unit may be understood as the output interface.

In embodiments of this application, the word such as "example" or "for example" is used to represent giving an example, an illustration, or a description. Any embodiment or design solution described as an "example" in this application should not be construed as being better or more advantageous than another embodiment or design solution. Specifically, the term "example" is used to present a concept in a specific manner.

In embodiments of this application, terms "relevant (corresponding, relevant)" and "corresponding (corresponding)" may be interchangeably used sometimes. It should be noted that meanings expressed by the terms are consistent when differences of the terms are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It should be further understood that numbers such as "first" and "second" in various embodiments of this application are merely for differentiation for ease of description, and are not intended to limit the scope of embodiments of this application. For example, bandwidths under different conditions are differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the division of units is merely logical function division and may be other division in actual implementation. For example, a plurality of units or components may be combined or integrated into another system, or some features may be ignored or may not be performed. In addition, the displayed or discussed mutual couplings or direct couplings or communications connections may be implemented by using some interfaces. The indirect couplings or communications connections between apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as a separate product, the functions may be stored in a computer-readable storage medium. Based on such an understanding, the technical solutions of this application essentially or parts contributing to the prior art or some of the technical solutions may be embodied in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for resource selection, comprising:

   determining, by a first terminal device, a first service to be sent;
   determining, by the first terminal device, that a delay of transmitting the first service by using a first resource is greater than a first threshold, wherein the first resource is a resource indicated by a second terminal device; and
   selecting, by the first terminal device, a second resource, wherein the second resource is used to transmit the first service, and the second resource is different from the first resource.

2. The method according to claim 1, wherein the first resource is a periodic resource, and the determining, by the first terminal device, that a delay of transmitting the first service by using a first resource is greater than a first threshold comprises:
   determining, by the first terminal device, based on a cycle of the first resource and/or a size of the first resource, that the delay of transmitting the first service by using the first resource is greater than the first threshold.

3. The method according to claim 1 or 2, wherein the method further comprises:
   selecting, by the first terminal device, the second resource when it is determined that a priority of the first service is greater than a second threshold.

4. The method according to claim 3, wherein the method further comprises:

   determining, by the first terminal device, a first time area based on the priority of the first service;
   receiving, by the first terminal device, resource information that is from the second terminal device, wherein the resource information comprises a usage status of a resource that is in the first time area and that is not configured for the first terminal device; and
   determining, by the first terminal device, a first candidate resource set based on the resource information; and
   the selecting, by the first terminal device, a second resource comprises:
   selecting, by the first terminal device, the second resource from the first candidate resource set in the first time area.

5. The method according to claim 4, wherein the method further comprises:

   performing, by the first terminal device, resource sensing on all or some resources that are in the first time area; and
   selecting, by the first terminal device, a second candidate resource set in a second time area based on a resource sensing result in the first time area, wherein the resource sensing result indicates a usage status of a resource that is in the second time area; and
   the selecting, by the first terminal device, a second resource comprises:
   selecting, by the first terminal device, the second resource from the first candidate resource set and/or the second candidate resource set in the second time area.

6. The method according to any one of claims 1 to 5, wherein the method further comprises:
   transmitting, by the first terminal device, the first service by using the second resource.

7. The method according to any one of claims 1 to 6, wherein the method further comprises:
   sending, by the first terminal device, first indication information to the second terminal device, wherein the first indication information indicates the first terminal device to transmit the first service by using the second resource.

8. The method according to any one of claims 1 to 7, wherein the first terminal device and the second terminal device belong to a first side link SL device group.

9. An apparatus for resource selection, comprising:

a processing unit, configured to determine a first service to be sent, wherein
the processing unit is further configured to: determine that a delay of transmitting the first service by using a first resource is greater than a first threshold, wherein the first resource is a resource indicated by a second terminal device; and
the processing unit is further configured to: select a second resource, wherein the second resource is used to transmit the first service, and the second resource is different from the first resource.

10. The apparatus according to claim 9, wherein the first resource is a periodic resource, and the processing unit is specifically configured to:
determine, based on a cycle of the first resource and/or a size of the first resource, that the delay of transmitting the first service by using the first resource is greater than the first threshold.

11. The apparatus according to claim 9 or 10, wherein the processing unit is further configured to:
select the second resource when it is determined that a priority of the first service is greater than a second threshold.

12. The apparatus according to claim 11, wherein the processing unit is further configured to: determine a first time area based on the priority of the first service;
the apparatus further comprises:

a transceiver unit, configured to receive resource information that is from a second terminal device, wherein the resource information comprises a usage status of a resource that is in the first time area and that is not configured for the apparatus;
the processing unit is further configured to: determine a first candidate resource set based on the resource information; and
the processing unit is specifically configured to:
select the second resource from the first candidate resource set in the first time area.

13. The apparatus according to claim 12, wherein the processing unit is further configured to:

perform resource sensing on all or some resources that are in the first time area; and
select a second candidate resource set in a second time area based on a resource sensing result in the first time area, wherein the resource sensing result indicates a usage status of a resource that is in the second time area; and
the processing unit is specifically configured to:
select the second resource from the first candidate resource set and/or the second candidate resource set in the second time area.

14. The apparatus according to any one of claims 9 to 13, wherein the transceiver unit is further configured to:
transmit the first service by using the second resource.

15. The method according to any one of claims 9 to 14, wherein the transceiver unit is further configured to:
send first indication information to the second terminal device, wherein the first indication information indicates the first terminal device to transmit the first service by using the second resource.

16. The apparatus according to any one of claims 9 to 15, wherein the apparatus and the second terminal device belong to a first side link SL device group.

17. An apparatus for resource selection, comprising: at least one processor, wherein the at least one processor is coupled to at least one memory, and the at least one processor is configured to execute a computer program or instructions stored in the at least one memory, to enable the apparatus to implement the method according to any one of claims 1 to 8.

18. A computer-readable storage medium, comprising a computer program, wherein when the computer program is run on a computer, the computer is enabled to perform the method according to any one of claims 1 to 8.

19. A computer program product, wherein when the computer program product runs on a computer, the computer is enabled to perform the method according to any one of claims 1 to 8.

**20.** A chip system, comprising: a processor, configured to invoke and run a computer program in a memory, to enable a communication device on which the chip system is installed to perform the method according to any one of claims 1 to 8.

System 100

FIG. 1

Group A

250
(GM 5)

210
(GM 1)

240
(GM 4)

260 (GH)

220
(GM 2)

230
(GM 3)

FIG. 2

300

S310: A first terminal device determines a first service to be sent

S320: The first terminal device determines that a delay of transmitting the first service by using a first resource is greater than a first threshold

S340: When it is determined that a priority of the first service is greater than a second threshold, the first terminal device selects a second resource

S330: The first terminal device selects the second resource, where the second resource is used to transmit the first service

FIG. 3

FIG. 4

FIG. 5

FIG. 6

## INTERNATIONAL SEARCH REPORT

| International application No. |
|---|
| **PCT/CN2022/092009** |

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT; CNKI; WPI; EPODOC; IEEE; 3GPP: 侧行链路, 侧链路, 直连链路, 资源, 分配, 选择, 指示, 控制UE, 组领导, 组管理器, 调度UE, 不足, 时延, 大于, 小于, 阈值, 重新, 自主, 优先级, side link, V2X, group, header, control, manager, scheduling, select, delay, time, duration, priority

### C. DOCUMENTS CONSIDERED TO BE RELEVANT

| Category* | Citation of document, with indication, where appropriate, of the relevant passages | Relevant to claim No. |
|---|---|---|
| Y | CN 109391922 A (BEIJING SAMSUNG TELECOM R&D CENTER et al.) 26 February 2019 (2019-02-26)<br>description, paragraphs [0026]-[0081], and figures 1-2 | 1-20 |
| Y | CN 112753256 A (ALCATEL-LUCENT SHANGHAI BELL CO., LTD. et al.) 04 May 2021 (2021-05-04)<br>description, paragraphs [0061]-[0090], and figure 4 | 1-20 |
| A | CN 111328080 A (HUAWEI TECHNOLOGIES CO., LTD.) 23 June 2020 (2020-06-23)<br>entire document | 1-20 |
| A | WO 2020064555 A1 (FRAUNHOFER-GESELLSCHAFT ZUR FOERDERUNG DER ANGEWANDTEN FORSCHUNG E.V.) 02 April 2020 (2020-04-02)<br>entire document | 1-20 |
| A | INTEL CORP. "Feature Lead Summary for NR-V2X AI-7.2.4.1.4 Resource Allocation Mechanism"<br>*3GPP TSG RAN WG1 Meeting #96, R1-1903397*, 01 March 2019 (2019-03-01),<br>entire document | 1-20 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 June 2022** | **29 June 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT

**Information on patent family members**

International application No.

**PCT/CN2022/092009**

| Patent document cited in search report | | | Publication date (day/month/year) | Patent family member(s) | | | Publication date (day/month/year) |
|---|---|---|---|---|---|---|---|
| CN | 109391922 | A | 26 February 2019 | WO | 2019031926 | A1 | 14 February 2019 |
| | | | | CN | 109391976 | A | 26 February 2019 |
| | | | | US | 2020221423 | A1 | 09 July 2020 |
| CN | 112753256 | A | 04 May 2021 | WO | 2020062003 | A1 | 02 April 2020 |
| CN | 111328080 | A | 23 June 2020 | EP | 3883281 | A1 | 22 September 2021 |
| | | | | WO | 2020125608 | A1 | 25 June 2020 |
| | | | | US | 2021314935 | A1 | 07 October 2021 |
| WO | 2020064555 | A1 | 02 April 2020 | US | 2021282121 | A1 | 09 September 2021 |
| | | | | JP | 2022502928 | A | 11 January 2022 |
| | | | | EP | 3857925 | A1 | 04 August 2021 |
| | | | | CN | 113170280 | A | 23 July 2021 |
| | | | | KR | 20210063417 | A | 01 June 2021 |

Form PCT/ISA/210 (patent family annex) (January 2015)

22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110626104
- CN 202110794031